Europäisches Patentamt

European Patent Office

Office européen des brevets

(11) Publication number: 0 473 915 A1

# EUROPEAN PATENT APPLICATION

(21) Application number: 91111917.0

(22) Date of filing: 17.07.91

(51) Int. Cl.⁵: C08F 2/44, C08F 214/00,
//(C08F214/00,214:08)

(30) Priority: 20.07.90 US 556769

(43) Date of publication of application:
11.03.92 Bulletin 92/11

(84) Designated Contracting States:
AT BE CH DE DK ES FR GB GR IT LI LU NL SE

(71) Applicant: The B.F. Goodrich Company
3925 Embassy Parkway
Akron Ohio 44313(US)

(72) Inventor: Vyvoda, Josef Cyril
287 Greenbriar Drive
Avon Lake, Ohio 44012(US)
Inventor: Perry, Scott
33803 Electric Blvd.
Avon Lake, Ohio 44012(US)
Inventor: Kline, Sally Ann
26960 Sleepy Hollow Drive
Westlake, Ohio 44145(US)

(74) Representative: von Kreisler, Alek,
Dipl.-Chem. et al
Patentanwälte Von Kreisler-Selting-Werner,
Deichmannhaus am Hauptbahnhof
W-5000 Köln 1(DE)

(54) Improved barrier PVC resins, compounds and articles derived therefrom.

(57) A barrier resin in particulate form produced by the process comprising polymerizing in combination (1) vinyl halide monomer; (2) vinylidene chloride monomer; (3) in-reactor modifying component selected from the group consisting of epoxide stabilizers, epoxidized soy-bean oil, epoxidized linseed oil, epoxidized tallow, epoxidized lard, the product of esterification of an epoxidized fatty acid and a synthetic alcohol, and synthetic epoxy esters. These resins can be formed into articles which have excellent barrier and heat sealability properties.

**Field of the Invention**

This invention relates to improved flexible vinyl barrier compositions and in particular, PVC resin compounds, methods of manufacturing and barrier articles derived from said resin compounds.

**Background of the Invention**

There are many published approaches directed to the preparation and uses of barrier films which comprise plasticized flexible vinyl compounds. Clear food wrap is a familiar example.

U.S. Patent No. 4,230,774 discloses one approach to arrive at a heat-sealable, flexible PVC based film wherein a copolymer of PVC/PVDC or PVC/acrylonitrile is first blended with a butadiene/acrylonitrile polymer and formed into a film whereby the film is laminated to a treated polypropylene film. This approach achieves good oxygen barrier properties from the vinyl copolymer, good water barrier properties from the polypropylene and the desired broad heat seal temperature from the polypropylene.

The art pertaining to flexible non-barrier PVC film has included development of anti-fogging formulations. U.S. Patent No. 3,950,289 is illustrative of a typical externally plasticized PVC film compound suitable as a food wrap. The PVC may be a homopolymer or a copolymer. The formulation below is an exemplary externally plasticized PVC formulations listed in U.S. Patent No. 3,950,289 as follows:

|  |  | Wt. Parts |
|---|---|---|
| Resin | PVC | 100 |
| Plasticizer | Di-(2-EHA) adipate | 20 |
| Plasticizer | Acetyl tri-n-butyl citrate | 15 |
| Secondary Stabilizer | Epoxidized soybean oil | 10 |
| Lubricant | Glycerol monooleate | 3 |
| Anti-fog Additives | (1) Polyalkoxy alkyl phenol | 0.5-5 |
|  | (2) $C_{2-8}$ polyol partial ester of $C_{12-18}$ monocarboxylic acid | 1-6 |
|  | (3) Polyalkoxy derivative of (2) having 3-30 ($C_{2\ or\ 3}$ alkoxy) groups | 0.5-5 |

U.S. Patent No. 3,959,550 discloses a an internally plasticized flexible tear resistant PVC barrier resin compound comprising a solution PVC graft with an ester/nitrile monomer mixture, the preformed PVC having an I.V. of about 1.0. The features highlighted in this composition are improved clarity, high $O_2$ and $CO_2$ permeability (as with a plasticized PVC) and low water permeability (as with a non-plasticized PVC). Such features are desirable for food packaging uses. The graft polymer is presented as having a better balance of properties than a physical blend of a PVC and a nitrile/acrylate copolymer or a conventional plasticized PVC composition.

The above references illustrate established generally desirable features of vinyl film compounds used for packaging and include:
1. good film elongation and elasticity (flexibility)
2. high tensile strength and tear resistance (toughness)over a broad temperature range.
3. high clarity, gloss, low fogging
4. chemical inertness (including FDA clearances)
5. low moisture permeability
6. high $O_2$ and $CO_2$ permeability (gas permeability)
7. fast heat sealability
8. heat sealability over a broad temperature range
9. good heat and UV stability
10. resin processability (plasticizer uptake)
11. low incidence of gels
Particularly troublesome antagonistic relationships are encountered with attempts to render PVC flexible and yet provide lower gas permeability properties. PVC is a rigid material in the unplasticized state, therefore plasticizers are required. External plasticizers, however, significantly increase the gas permeability properties of flexible vinyl compounds. These compounds are suitable where higher permeabilities are desired, but not suitable where controlled barrier performance is sought. PVC homopolymers generally exhibit good toughness but compared to softer copolymers, homopolymers require proportionately higher levels of plasticiizer to achieve similar flexibility. Additionally, flexible copolymers may provide the film properties demanded but generally exhibit poor porosity and external plasticization is more difficult. Moreover PVC copolymers with high vinyl chloride content alone generally exhibit higher gas permeability compared with PVC homopolymer and are not generally desirable for controlled barrier uses.

High vinylidene chloride (VDC) polymers are known to have enhanced oxygen barrier properties. In fact, for uses where moderate gas permeability is desired a modification would be necessary. On the other hand copolymers with lower levels of VDC with vinyl chloride lack the required flexibility therefore additional plasticizer would be needed in order to obtain adequate film physical properties. Addition of plasticizer to a resin having poor porosity would be difficult.

For suitability in barrier film applications, an extrudable blown film must contain a resin compound exhibiting good film tensile strength, elongation, hardness, heat and light stability, high clarity, low incidence of gels, good melt flow and rapid heat sealability characteristics. The difficulty in optaining the desired balance of properties is further exacerbated by a limited source of moding ingredients suitable for direct food contact uses.

In certain applications where one desires a film compound having a balance of the aforementioned properties but where reduced gas permeability is desired, the antagonistic property relationships arise, some of which have been mentioned. Moreover, as mentioned above attempting to compound desired vinyl chloride copolymers with added plasticizers, poor resin porosity directly results in prohibitive extended plasticizer dry mix times or even failure of the resin to absorb adequate levels of plasticizer resulting in a useless wet resin slurry. Where plasticizer is adequately taken up by a PVC copolymer, a remaining problem of high incidence of gel particles may exist. Accordingly, it would be desirable to provide a barrier film resin compound based on barrier PVC copolymers which have a controlled range of gas permeability but retain good physical properties including especially superior heat sealing properties. The desired barrier resin copolymer compound must also obviate the expected difficulties such as loss in film strength and poor plasticizer uptake.

## Summary of the Invention

In one aspect of the present invention there is provided particulate barrier resin comprising vinyl halide in combination with vinylidene halide, polymerized in the presence of an in-reactor modifying component selected from the group of natural epoxidized oils such as epoxidized soya-bean and cotton seed oil; epoxidized tallow and lard; the products of esterification of an epoxidized fatty acid and a synthetic alcohol, and synthetic epoxy esters.

In another aspect of the present invention there is provided novel barrier resin compound comprising the particulate barrier resin which is mixed or compounded with additives and optionally fused to form pellets. The mixture is suitable for use in commercial controlled barrier uses; the processes of fabrication including for example, extrusion blow molding, calendering and the like.

In a further aspect of the present invention it is provided barrier articles such as film, sheet or a formed article comprising the barrier resin compounds in a fused state.

## Detailed Description

The in-reactor modified VC/VDC barrier resins employed in the present invention can be prepared by any polymerization method which advantageously employs the dispersing methods herein disclosed. Mass, suspension, dispersion, emulsion and micro suspension process are all pertinent to the process disclosed herewith. Preferably, the process of this invention is generally carried out in an aqueous medium. A mass process is described in U.S. Patent No. 3,522,227, incorporated herein by reference. A phase inversion process may also be used in incorporating the dispersant system of the present invention. Such a phase inversion process is disclosed in U.S. Patent No. 3,706,722, incorporated herein by reference. In the phase inversion process, the monomer is the continuous phase during the early part of the polymerization and after about 10% conversion additional water is added such as to make the water the continuous phase and the monomer the discontinuous phase. For the sake of brevity, an exemplary detailed description for polymerization the in-reactor barrier resin compounds of the present invention will pertain to the preparation of these resins by the suspension polymerization method. It is understood that this description is not a limitation as to the specific polymer compositions nor the particular polymerizing technique which can be pursued in the practice of this invention.

Exemplary in-reactor modified copolymers of the present invention referred to in this specification pertain to vinyl halide/vinylidene halide copolymers copolymerized in the presence of said in-reactor modifying component optionally containing a minor amount of up to about 20%, by weight of one or more other ethylenic unsaturated monomers having at least one terminal $CH_2 = C<$ grouping. Suitable comonomers that may be included are the $\alpha,\beta$-olefinically unsaturated carboxylic acids, such as acrylic acid, methacrylic acid, ethacrylic acid, $\alpha$-cyanoacrylic acid, and the like; esters of acrylic acid, for example, methyl acrylate, ethyl acrylate, butyl acrylate, octyl acrylate, cyanoethyl acrylate, and the like; vinyl acetate; esters of methacrylic acid, such as methyl methacrylate, ethyl methacrylate, butyl methacrylate, and the like; nitriles, such as acrylonitrile and methacrylonitrile; acrylamides, such as methyl acrylamide, N-methylol acrylamide, N-butoxy methacrylamide, and the like; halogen containing vinyl monomers such as vinyl fluoride, vinylidene fluoride, and vinyl bromide, vinyl ethers such as ethylvinyl ether, chloroethyl vinyl ether and the like; the vinyl ketones, styrene derivatives including $\alpha$-methyl styrene, vinyl toluene, chlorostyrene; vinyl naphthalene; crosslinking monomers such as diallyl phthalate, trimethylol propane triacrylate, allyl methacrylate and the like; allyl and vinyl chloroacetate, vinyl acetate, vinyl pyridine, and methyl vinyl ketone; olefins such as ethylene and propylene; and other copolymerizable monomers or mixtures of monomers having suitable reactivity ratios with the principle monomer and known to those skilled in the art. The preferred in-reactor modified barrier resins are vinyl chloride/vinylidene chloride (VC/VDC) copolymers having from about 2 to about 30, preferredly from about 2 to about 15 parts vinylidene chloride per 100 weight parts of modified resin reactor product, the monomers copolymerized in the presence of from about 5 to about 40, preferredly from about 5 to about 30 parts and most preferredly from about 5 to about 20 parts by weight of an in-reactor modifying component(s) per 100 parts of modified resin reactor product; said in-reactor modifying component is selected from the group of epoxide stabilizers, including natural epoxidized oils, such as epoxidized soya-bean and cotton seed oil; epoxidized tallow and lard; the products of esterification of an epoxidized fatty acid and a synthetic alcohol, and synthetic esters such as esters of epoxyalkylsuccinic acids.

As outlined above, a suitable example polymerization process is an agitated aqueous suspension polymerization process. Suspension polymerization techniques to prepare the in-reactor modified resin compounds of this invention are well-known in the art as set forth in The Encyclopedia of PVC, pp. 76-85, published by Marcel Decker, Inc. (1976). This technique need not be discussed in great detail here. Within the scope of the present invention, this example technique involves the preparation of polymers polymerized from monomer(s) in the presence of said in-reactor modifying component in an aqueous medium containing: (1) primary suspending agent(s) consisting of one or more polymers such as polyvinyl alcohol having a medium degree of hydrolysis of generally 60-80% (PVA-MH) and optionally in combination with polyvinyl alcohol having a degree of hydrolysis higher than about 80% (PVA-HH); cellulose ether, hydroxypropyl methylcellulose (HPMC), partially hydrolyzed polyvinyl acetate, vinyl acetate-maleic anhydride or partially saponified polyalkyl acrylate or gelatin; (2) optional secondary dispersing agents such as polyvinyl alcohol having a lower degree of hydrolysis of from about 20-50% (PVA-LH) and (3) a monomer soluble polymerization initiator. Relative to PVC, suitable polymerization initiators are selected from the conventional free radical initiators such as organic peroxides and azo compounds. The particular free radical initiator will depend upon the monomeric materials being copolymerized, the molecular weight and color requirements of the copolymer and the desired temperature of the polymerization reaction. An amount of initiator in the range of about 0.005 part by weight to about 1.00 part by weight, based on 100 parts by weight of monomer(s) being polymerized, is satisfactory. It is preferred to employ an amount of initiator in the range of about 0.01 part by weight to about 0.20 part by weight, based on 100 parts by weight of vinyl halide monomer. Examples of suitable initiators include lauroyl peroxide, benzoyl peroxide, acetyl cyclohexyl sulfonyl peroxide, diacetyl peroxide, cumeme hydroperoxide, t-butyl or alpha-cumyl peroxyneodecanoate, t-butyl peroxypivalate, t-butyl peroxyactoate, isopropyldicarbonate, di-n-propyl peroxydicarbonate, disecondary butyl peroxydicarbonate, di-2-ethylhexyl peroxydicarbonate (EHP), 2,2'-azobis-(2,4,-dimethyl valeronitrile), azobisisobutyronitrile, azo-diisobutyrate and t-butyl perbenzoate, the choice depending generally on the reaction temperature range selected.

The polymerization process of this invention may be carried out at any suitable temperature range which is known and typical for the chosen method in light of the monomer(s) to be polymerized. For instance, a temperature range from about 0°C to about 80°C is generally employed for producing vinyl halide suspension polymers. Preferredly the copolymers of the present invention are copolymerized at a temperature range from about 40°C to about 70°C. The temperature within this range may be varied in the course of the polymerization. In order to facilitate temperature control during the polymerization process, the reaction medium is kept in contact with cooling surfaces cooled by water, brine, evaporation, etc. This is accomplished by employing a jacketed polymerization reactor wherein the cooling medium is circulated through the jacket throughout the polymerization reaction. This cooling is necessary since most all of the polymerization reactions are exothermic in nature. It is understood of course, that a heating medium may be circulated through the jacket, if necessary.

Percent conversion of vinyl halide monomer can range from about 30 % to about 90 % and is most preferably in the range from about 60% to about 80%. Polymerization are generally terminated after a selected time or pressure drop by the use of a short stopping agent (SS) or stabilizers which exhibit polymerization arresting characteristics and are well established in the art. An exemplary listing of stabilizers which tend to inhibit polymerization and which are suitable for use as short-stopping agents in accordance with the present invention include the sulfur-containing organ-tin stabilizers, especially di-n-butyl tin S,S'-bis-(isoctyl mercapto acetate), di-n-butyl tin-bis-mercaptopropanoate, di-n-butyl tin bis-(isobutyl thioglycolate), n-butyl tin tris-(isobutyl thioglycolate), and tri-n-butyl tin isobutyl thioglycolate. Other exemplary short-stopping agents include alpha-methyl-styrene, hydroquinone, naphthoquinone and various phenolics such as phenol and bisphenol-A; thioalcohols, amines, as for example diphenylamine, triphenylamine, triethylamine and ethylenediamine tetraacetic acid. The short-stopping agent is employed in amount effective to terminate the polymerization reaction. Generally, less than about 2 percent by weight, based on the originally charged vinyl chloride monomer, is sufficient. For practical purposes the amount of short-stopping agent required to terminate polymerization will range between about 0.01 to about 2 percent by weight of the vinyl chloride monomer charge.

After suspension polymerization is stopped the resin compound consists of a slurry of particles having a typical average particle size of from about 50 to about 200 microns. The particulate resins are stripped of residual monomer, de-watered and dried in the conventional manner to yield dry particulate resin.

Other components which may be subsequently mixed with the resin compounds of the present invention may include antioxidants such as hindered alkylated phenolics. Exemplary phenolics include 2,6-di-t-butyl-4-methyl phenol also referred to as butylated hydroxy toluene, bis-phenols, such as 2,2'-methylenebis(4-methyl-6-t-butylphenol), thio-phenols such as 4,4'-dihydroxydiphenyl sulfide otherwise referred to as thiodiphenol, and di-phenyl ethers such as 4,4'-dihydroxydiphenyl ether. These types of stabilizers when used are generally present in an amount from about 0.2 - 5 phr and provide protection directly from heat.

Heat stabilizing ingredients include alkyltin compounds such as methyltin, octyltin, mixed metal alkyltins, dialkyl tin di-carboxylates, methyltin mercaptides, butyltin mercaptides, dialkyl tin bis(alkyl mercaptocarboxylate) such as di-n-octyltin-S,S'-bis(isooctyl mercaptoacetate) or the tris isooctyl mercaptoacetate analogue, butylthiostannoic acid, and other ester tins. Any alkylated tin having features such as low toxicity e.g. higher alkyl types, FDA approval, USP class 6 approval, along with good color, clarity and compatibility, low plateout on equipment, and non-staining properties characteristic of this class of stabilizer can be desirable for use in the compounds of this invention. Other useful stabilizers inlude metal or mixed metal soaps such as calcium/zinc soap stabilizers. Examples of suitable calcium soaps are calcium stearate, calcium laurate, calcium oleate, calcium palmitate, calcium octanoate, and calcium benzoate. Calcium stearate is a preferred calcium soap. Examples of suitable zinc soaps are zinc stearate, zinc laurate, zinc palmitate, zinc 2-ethyl hexoate, zinc octanoate, zinc oleate, and zinc benzoate. Zinc stearate is a preferred zinc soap.

Co-stabilizers can optionally be included in subsequent compounding steps and include phosphite stabilizers, polymeric phosphites, thioesters such as dilauryl thiodipropionate and beta-diketones. Plasticizing co-stabilizers known in the art can be optionally added to improve heat stability. Exemplary co-stabilizing plasticizers include the aforementioned epoxy co-stabilizers such as epoxidized soybean oil and epoxidized linseed oil.

Examples of optional plasticizers that are suitable for inclusion in the barrier resin compounds of the present invention include various adipic acid derivatives, azelaic acid derivatives, benzoic acid derivatives, citric acid derivatives, epoxy derivatives, ethers, glycol derivatives, glycolates, glycerol derivatives, isobutyric acid derivatives, isophthalic acid derivatives, isosebacic acid derivatives, oleic acid derivatives, pentaerythritol derivatives, phosphoric acid derivatives, phthalic acid derivatives, sebacic acid derivatives, stearic acid derivatives, tartaric acid derivatives, terephthalates, trimellitates, and combinations of the above types. The above plasticizers as well as other plasticizers which can be utilized in the present invention are set forth in The Technology of Plasticizers, by Sears and Darby, pages 893-1085, John Wiley & Sons, New York, 1982, which is hereby fully incorporated by reference. Additionally, other plasticizers not listed in this reference can also be employed.

Exemplary specific adipic acid derivatives useful as plasticizers are diisobutyl adipate, di-2-ethylhexyl adipate, heptyl nonyl adipate, octyl decyl adipate, diisodecyl adipate, dibutoxyethyl adipate, di-(methylcyclohexyl) adipate, and bis(2,2,4-trimethyl-1,3-pentanediol monoisobutyrate) adipate and the like.

Specific examples of azelaic acid derivatives are di-n-hexyl azelate, di-2-ethylbutyl azelate, and di-2-ethylhexyl azelate (DOZ).

Specific examples of benzoic acid derivatives include ethylene glycol dibenzoate, diethylene dibenzoate, triethylene glycol dibenzoate, and polyethylene glycol (200) dibenzoate.

Exemplary citric acid derivatives include acetyl tri-n-butyl citrate, acetyl tri-n-butyl citrate, and acetyl tri-(n-octyl, n-decyl) citrate.

Suitable epoxy derivatives can function as plasticizers admixed in the present barrier resin compound and include 2-ethylhexyl epoxy tallate, epoxidized propylene glycol dioleate, and Bisphenol A diglycidyl ether.

Specific glycol derivatives include diethylene glycol diperlargonate, triethylene glycol dipelargonate, triethylene glycol di-2-ethylbutyrate, triethylene glycol di-2-ethylhexanoate, and polyethylene glycol (200) di-2-ethylhexanoate.

Suitable glycolates include methyl phthalyl ethyl glycolate, ethyl phthalyl ethyl glycolate, and butyl phthalyl butyl glycolate.

Exemplary glycerol derivatives are glycerol monooleate and glycerol tributyrate.

Isosebacic acid derivatives can be included for example di-n-butyl isosebacate and di-2-ethylhexyl isosebacate.

An exemplary oleic acid ester includes for example butyl oleate.

Exemplary pentaerythritol esters contain from 1 to about 18 carbon atoms including pentaerythritol fatty acid ester.

Specific phosphoric acid derivatives are triesters having alcohol groups which independently, contain from 1 to about 18 carbon atoms and include tributoxyethyl phosphate, tricresyl phosphate (TCP), tridimethylphenyl phosphate, triphenyl isopropylphenyl, t-butylphenyl diphenyl phosphate, 2-ethylhexyl diphenyl phosphate, and isodecyl diphenyl phosphate.

Exemplary phthalates include butyl octyl phthalate, butyl isodecylphthalate, phthalate, di-2-ethylhexyl phthalate, diisooctyl phthalate, phthalate, di(heptyl,nonyl) phthalate, di(heptyl,nonyl,undecyl) phthalate (Santicizer 711), diisononylphthalate, n-octyl n-decyl phthalate (DNODP-6,10 and DNODP-8,10), diisodecyl phthalate, diundecyl phthalate, ditridecylphthalate diallyl phthalate, dihydroabietyl phthalate, butyl, butyl benzyl phthalate (Santicizer 160), alkyl benzyl phthalate (Santicizer 261), and alkyl aryl modified phthalate (Santicizer 213).

Exemplary sebacic acid diesters have alcohol groups containing from 1 to about 18 carbon atoms for example di-2-ethylhexyl sebacate.

Exemplary various stearic acid derivatives include n-butyl stearate; butyl acetoxy, methoxyethyl acetoxy stearate; and methyl pentachlorostearate.

A tartaric acid derivative includes for example dibutyl tartrate.

A specific terephthalate acid derivative for example is di-2-ethylhexyl terephthalate.

Specific trimellitate derivatives for example being tri-2-ethylhexyl trimellitate, tri-nonyltrimellitate, tri-n-octyl, tri-n-decyl trimellitate, and triisodecyl trimellitate.

It is expected that other components may be advantageously included in the compounds of the present invention. When employed, these can include compounds from the group consisting of: lubricants, impact modifiers, tinting colorants, blueing agents, pigments, and processing aids all of which are established compounding ingredients and serve various purposes known in the PVC compounding art.

Exemplary lubricants are polyglycerols of di- and trioleates, polyethylene and oxidized polyethylene.

Exemplary impact modifiers are acrylonitrile butadiene styrene terpolymers (ABS) and methacrylate butadiene styrene (MBS). Other impact modifiers are disclosed in Plastics Compounding, Nov./Dec., 1983: "Update: Impact Modifiers for Rigid PVC," by Mary C. McMurrer, incorporated by reference herein.

Exemplary processing aids are acrylic polymers such as poly methylacrylate. Other processing aids are disclosed in The Plastics and Rubber Institute: International Conference on PVC Processing, April 26-28-(1983), Paper No. 17.

During manufacture, the ingredients of the compounds are generally combined under thorough mixing and pre-formed into pellets. These pellets are then further melt processed in the molding stage into the desired articles. Mixing may be accomplished by any of the customary methods known to those skilled in the art such as with a Banbury, Henschel, 2-roll mills, or other mixers such as mixer-pelletizers manufactured by Buss Kondux, referred to as a Buss kneader pelletizer.

The compositions of the present invention may be formed into useful articles by different molding processes depending upon the desired end product. Standard techniques may be used to form molded articles, such as by injection molding and extrusion molding.

## EXAMPLES

In a preliminary investigation, internally plasticized PVC copolymers were found to exhibit more flexibility, but did not exhibit increased gas permeability and reduction of toughness as was expected. A copolymer of 90/10 vinyl chloride/vinylidene chloride (VC/VDC) was found to provide a desired reduction in hardness (internal plasticization) and this copolymer also exhibited no increased oxygen permeability compared with a commercial PVC homopolymer, both films having been prepared by compression molding. Gas permeability was measured according to procedure described in the MOCON/Modern Controls, Inc. manual, Mocon PN140-042, Revision E.

| | Homo PVC* | 90/10 VC/VDC |
|---|---|---|
| Hardness (Shore D) | 80 | 78 |
| Oxygen permeability cc/100 in$^2$/24 hr./atm/mil | 5.0 | 5.0 |

*Geon 86X1FG ex. BFGoodrich, Cleveland, OH

Such a copolymer having reduced hardness is desirable since less impact modifier is necessary to achieve adequate toughness compared to an impact modifier used at higher levels (above 10%) for homo-PVC. Impact modifiers are known to increase gas permeability in combination with PVC. Therefore, it is advantageous to utilize a VC/VDC copolymer as exemplified above which obviates this problem when it is desired to maintain controlled gas barrier permeability.

The expected problem of poor resin porosity was confirmed for VC/VDC copolymers. A loss in porosity would present a serious shortcoming of for VC/VDC copolymers in commercial plasticized PVC film compounding processes. The problem encountered is illustrated below by the identical preparation of two VC/VDC suspension copolymers wherein the ratio of VC/VDC was varied. The lower I.V. of the copolymer resins was expected.

| Resin | Ratio VC/VDC | I.V. | DOP Porosity |
|---|---|---|---|
| Homo | 100/0 | 1.0 | ~0.3 |
| Co-P1 | 95/5 | 0.87 | 0.15 |
| Co-P2 | 90/10 | 0.5 | 0.08 |

In light of lower porosity, copolymer resins Co-P1 and Co-P2 would be expected to exhibit longer plasticizer mix times due to the lower in porosity. In some instances plasticization of such resins may be practically impossible.

In separate studies an in-reactor PVC composition was found to exhibit reduced gas permeability and was rendered flexible. The expected problem of the reduction of film physical properties did not occur. This composition was a homo PVC resin which was polymerized in the presence of epoxidized soybean oil (ESO). Films of this in-reactor modified resin were found to exhibit good tensile strength, elongation, modulus and low haze compared with a commercial flexible PVC film compound milled in a similar fashion. The in-reactor modified homopolymer resin contained a 78/22 composition of VC/ESO.

| | (I) Plasticized Film Compound | (II) 78/22 VC/ESO In-reactor Modified resin |
|---|---|---|
| Tensile Strength (PSI) | 4800 | 4300 |
| Percent elongation | 250 | 170 |
| 100% Modulus | 3000 | 3300 |
| Haze % | 0.7 | 0.3 |

Furthermore, oxygen and carbon dioxide permeability were measured and the result indicated unexpected significantly lower gas permeability with II compared with I.

| Gas Permeability cc/100 in$^2$/24 hr/atm/mill | I | II |
|---|---|---|
| oxygen | 680 | 99 |
| carbon dioxide | 6680 | 876 |

The preferred in-reactor modified PVC resin compound was discovered by employing an in-reactor modification of a VC/VDC monomer mixture wherein ESO was placed into the polymerizer containing VC and VDC and subsequently initiating polymerization.

Investigation of the heat seal properties of an exemplary VC/VDC in-reactor modified barrier resin of the present invention reveals improved performance compared with commercially available plasticized flexible film compounds. Two improvements noted are the time to achieve heat seal bonding and the range of temperatures at which adequate seal bonds are obtained.

| (Method) | Heat Seal Range | Time to Seal (sec) |
|---|---|---|
| Compound 1[1] | 320-360 °F | 3 s |
| Compound 2[2] | 270-360 °F | 3 s |
| Example X | 320-470 °F | 0.5 s |

[1] and [2] commercially available food wrap film®

As is shown above, Example X of the present invention exhibited significant broadening of the heat seal range, moreover heat seal bonds were obtained in 0.5 seconds. Both of these features are advantageous in enhanced productivity in end use packaging processes.

In the examples which follow, examples of preferred in-reactor modified VC/VDC copolymers polymerized in the presence of ESO were prepared with the following ingredients charged batchwise into polymerizers of varying capacity following the general reactor charging procedure below:

**General Reactor Charging Procedure**

Vinyl chloride monomer(VCM), vinylidene chloride monomer (VDC), deionized (D.I.) water, hydroxypropyl methylcellulose; PVA-LH, PVA-MH or PVA-HH and polymerization initiator were introduced into the appropriate capacity reactor equipped with an agitator. The polymerizations were conducted generally at a temperature of from about 50 to 55°C under agitation The polymerization was stopped in each example after the specified time using the phenolic shortstop. The resins were then recovered, dewatered, stripped and dried.

## TABLE 1

| Weight (Kg) Charged | | | |
|---|---|---|---|
| Example | 1 | 2 | 3 |
| VCM | 15.2 | 0.87 | 1151 |
| $H_2O$ | 25.4 | 1.9 | 2160 |
| VDC | .34 | 0.11 | 72 |
| ESO | 1.7 | 0.11 | 216 |
| PVA-MH | 0.4 | 0.026 | 36.5 |
| PVA-HH | - | 0.024 | 2.4 |
| HPMC | 0.92 | 1.0 | 45 |
| Initiator | 0.013 | .00073 | 1.0 |
| SS* | 0.034 | 0.034 | 1.4 |
| Reaction Time | 600 min | 480 min | 600 min |
| % Conversion | 73.2 | 36.8 | 80.6 |
| I.V. | 0.709 | 0.45 | 80.6 |
| Corrected % Comp. VC | 94.3 | 59.3 | 80 |
| VDC | 2.6 | 20 | 13.1 |
| ESO | 13.1 | 20.3 | 15.0 |

* Added after reaction time listed.

The Example 3 was further compounded by adding the following ingredients:

| Ingredient | (phr) |
|---|---|
| Example 3 resin | 100 |
| Ca/Zn stabilizer | 3.3 |
| Lubricants | 5 |
| Processing aid | 1.9 |
| Impact modifier | 15 |
| Colorant | 0.065 |

A control resin compound wherein the modifying component of example 3 was compounded into a 90/10 VC/VDC copolymer along with other admixed ingredients according to the following formula:

| Ingredient | (phr) |
|---|---|
| 90/10 VC/VDC resin | 100 |
| ESO | 18 |
| Tin stabilizer | 2 |
| Lubricant | 0.9 |
| Processing aid | 1.75 |

Both compounds were milled, cubed and extrusion blown into films of 2.0 mils. Oxygen permeability was determined and the following values were obtained:

## Oxygen Permeability

### $CC/100^2/24$ hr./atm/mil

1. Example 3 compound      38.8[1]

2. 90/10 VC/VDC compound      41.4[2]

1 avg. of 4 trials

2 avg. of 8 trials

The permeability results show that the preferred in-reactor modified resin compound exhibited lower oxygen permeability than the control in spite of the fact that the in-reactor modified resin compound contained 15 phr of impact modifier which is known to substantially increase the gas permeability of vinyl resins. Furthermore, the preferred compund exhibited desired flexibility without the need for added plasticizers which would have increased the gas permeability above the desired level.

## Claims

1. A barrier resin in particulate form produced by the process comprising polymerizing in combination (1) vinyl halide monomer; (2) vinylidene chloride monomer; (3) in-reactor modifying component selected from the group consisting of epoxide stabilizers, epoxidized soy-bean oil, epoxidized linseed oil, epoxidized tallow, epoxidized lard, the product of esterification of an epoxidized fatty acid and a synthetic alcohol, and synthetic epoxy esters.

2. A barrier resin of Claim 1 wherein the vinyl halide is vinyl chloride.

3. A barrier resin of Claim 2 wherein vinylidene chloride is present during polymerization at from about 2 to about 15 parts by weight per 100 weight parts of said resin, and said in-reactor modifying component is present during polymerization of said monomers at from about 5 to about 20 parts by weight per 100 weight parts of said barrier resin.

4. A barrier resin of Claim 3 comprising an effective amount of at least one component selected from group consisting of stabilizer, plasticizer, impact modifier, lubricant, processing aid, colorant, and anti-fogging additive.

5. A barrier resin of Claim 3 wherein said is in-reactor modifying component is epoxidized soy-bean oil.

6. A barrier resin of Claim 5 wherein said resin has an average particle size by weight of from about 50 microns to about 200 microns.

7. A process for improving the heat sealability and gas permeability of a flexible PVC barrier resin compound comprising polymerizing vinyl halide in the presence of vinylidene halide and in-reactor modifying component selected from the group consisting of epoxide stabilizers, epoxidized soy-bean, epoxidized linseed oil, epoxidized tallow, epoxidized lard, the products of esterification of an epoxidized fatty acid and a synthetic alcohol, and synthetic epoxy esters.

**8.** A process of Claim 7 wherein the vinyl halide is vinyl chloride and the vinylidene halide is selected from the group consisting of vinylidene fluoride vinylidene chloride and vinylidene bromide.

**9.** A process of Claim 8 wherein vinylidene chloride is combined with vinyl chloride and said in-reactor modifying component during polymerization, and wherein between about 85 to about 98 weight parts of vinyl chloride, about 2 to about 15 weight parts of vinyldene chloride and about 5 to about 20 weight parts of said in-reactor modifying component is added to a polymerization vessel prior to initiating polymerization of said monomers.

**10.** A process of Claim 9 wherein said in-reactor modifying component is epoxidized soy-bean oil.

**11.** A process of Claim 7 wherein said polymerization is conducted in an agitated aqueous suspension medium.

**12.** A process of Claim 11 wherein at least one PVA dispersant is present.

**13.** A process of Claim 12 wherein said polymerization is conducted at a temperature of from about 0 °C to about 80° C.

**14.** A barrier PVC resin compound comprising a polymer formed by (1) vinyl halide monomer; (2) vinylidene chloride monomer; and (3) epoxidized soybean oil wherein (1), (2), (3), are present during polymerization and said compound further comprises an effective amount of stabilizer, plasticizer, lubricant, impact modifier, processing aid, and colorant.

**15.** A barrier PVC resin compound of Claim 14 having an oxygen transmission rate less than about 40 cc/100 in$^2$/24 hr./atm/mil; a shore D hardness of less than about 80; and a heat seal temperature range of from about 300 °F to about 490 °F wherein said seals are obtained in less than about 1 second.

European
Patent Office

EUROPEAN SEARCH
REPORT

Application Number

**EP 91 11 1917**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 022 104  (KUREHA KAGAKU KOGYO KK)<br>* page 1, line 9 - line 15 * * * page 2, line 23 - line 27; claims 1-5,7,8; examples 2-4 * * | 1-5,7-11, 13,14 | C 08 F 2/44<br>C 08 F 214/00 //<br>(C 08 F 214/00<br>C 08 F<br>C 08 F 214:08 ) |
| | – – – | | |
| X | US-A-3 896 063  (Y. TOYODA ET AL.)<br>* reference example * * * column 4, line 21 - line 33; claims; examples 3-7 * * | 1-2,4-5, 7-8,10-14 | |
| | – – – | | |
| X | PATENT ABSTRACTS OF JAPAN vol. 8, no. 15 (C-206)(1452) 21 January 1984<br>& JP-A-58 180 513 ( TOA GOSEI KAGAKU KOGYO KK )<br>* abstract * * | 1-3,5, 7-12,14 | |
| | – – – | | |
| X | PATENT ABSTRACTS OF JAPAN vol. 3, no. 91 (C-54)3 August 1979<br>& JP-A-54 066 994 ( KUREHA KAGAKU KOGYO KK )<br>* abstract * * | 1-5,7-10, 14 | |
| | – – – | | |
| X | PATENT ABSTRACTS OF JAPAN vol. 3, no. 147 (C-66)6 December 1979<br>& JP-A-54 125 289 ( KUREHA KAGAKU KOGYO KK )<br>* abstract * * | 1-4,7-9, 14 | |
| | – – – – – | | **TECHNICAL FIELDS SEARCHED (Int. Cl.5)**<br><br>C 08 F |

The present search report has been drawn up for all claims

| Place of search | Date of completion of search | Examiner |
|---|---|---|
| The Hague | 30 October 91 | FUHR C.K.B. |